# FASCICULE DE BREVET EUROPEEN

(11) **EP 3 433 149 B1**
(45) Date de publication et mention de la délivrance du brevet: **06.07.2022**
(21) Numéro de dépôt: 17716566.9
(22) Date de dépôt: 16.03.2017
(51) Int. Cl.: B60W 20/30, B60W 30/188, B60W 30/19

(54) **PROCEDE POUR DETERMINER LA FORCE MAXIMUM A TRANSMETTRE AUX ROUES MOTRICES D'UN VEHICULE MUNI D'UN GROUPE MOTOPROPULSEUR HYBRIDE**
VERFAHREN ZUR BESTIMMUNG DER MAXIMALEN KRAFT ZUR ÜBERTRAGUNG AUF DIE ANTRIEBSRÄDER EINES FAHRZEUGS MIT EINEM HYBRIDANTRIEBSSTRANG
METHOD FOR DETERMINING THE MAXIMUM FORCE TO BE TRANSMITTED TO THE DRIVING WHEELS OF A VEHICLE PROVIDED WITH A HYBRID POWER TRAIN

(30) Priorité: 21.03.2016 FR 1652411
(43) Date de publication de la demande: 30.01.2019
(73) Titulaire: Renault s.a.s, 92100 Boulogne Billancourt (FR)
(72) Inventeur: LE-ROY, Loïc, 92130 ISSY-LES-MOULINEAUX (FR); RUEL, Jean-Martin, 91360 EPINAY-SUR-ORGE (FR)
(74) Mandataire: Renault Group
(86) Numéro de dépôt international: PCT/FR2017/050613
(87) Numéro de publication internationale: WO 2017/162959

(56) Documents cités:
- DE-A1- 10 249 689
- DE-A1- 19 945 449
- DE-B3-102004 051 004
- FR-A1- 3 004 231

## Description

La présente invention concerne un procédé pour déterminer la force maximum à transmettre aux roues motrices d'un véhicule muni d'un groupe motopropulseur hybride. Elle s'applique tout particulièrement aux véhicules hybrides.

Dans le contexte actuel de consensus autour du réchauffement climatique, la diminution des émissions de dioxyde de carbone (CO₂) est un défi majeur auquel sont confrontés les constructeurs automobiles, les normes étant toujours plus exigeantes en la matière.

Outre l'amélioration constante des rendements des moteurs thermiques classiques, qui s'accompagne d'une baisse des émissions de CO₂, les véhicules électriques (« EV » d'après la terminologie anglo-saxonne « Electric Vehicle ») et les véhicules hybrides thermique-électrique (« HEV » d'après la terminologie anglo-saxonne « Hybrid Electric Vehicle ») sont aujourd'hui considérés comme la solution la plus prometteuse pour diminuer les émissions de CO₂.

Différentes technologies de stockage de l'énergie électrique ont été testées dans les dernières années afin de répondre aux besoins des EV et des HEV. Il apparaît aujourd'hui que les batteries à cellules lithium-ion (Li-ion) sont celles susceptibles de fournir le meilleur compromis entre la densité de puissance, qui favorise les performances en termes d'accélération notamment, et la densité d'énergie, qui favorise l'autonomie. A l'heure actuelle, le principal frein à l'essor de ces véhicules reste l'autonomie encore limitée des batteries Li-ion.

Pour les HEV notamment, cette autonomie limitée se traduit par le fait que le véhicule n'est capable de rouler en mode « électrique pur » ou tout simplement « électrique », c'est-à-dire sans l'assistance du moteur thermique, que sur de très courtes distances, tant que l'état de charge de la batterie de traction reste supérieur à un seuil supérieur prédéterminé. En dessous de ce seuil supérieur d'état de charge, le moteur thermique vient assister la machine électrique, le véhicule roulant alors en mode « hybride » et émettant donc un peu plus de CO₂. Et en dessous d'un seuil inférieur prédéterminé, le moteur thermique vient purement et simplement remplacer la machine électrique, qui n'est plus utilisée, le véhicule roulant alors en mode « thermique pur » ou « thermique » tout simplement, et émettant donc encore un peu plus de CO₂. L'état de charge de la batterie de traction est piloté entre le seuil supérieur et le seuil inférieur par une loi de gestion de l'énergie, implémentée dans le calculateur central du HEV, qui peut notamment recharger la batterie lors de phases de freinage récupératif. Outre l'inconvénient de l'augmentation des émanations de CO2 en mode hybride et en mode thermique, un tel fonctionnement selon le niveau de charge de la batterie peut également avoir un impact négatif sur les prestations fournies au conducteur. Il s'agit là d'un problème que la présente invention se propose de résoudre.

Parmi ces prestations susceptibles d'être impactées par le niveau de charge de la batterie, on peut citer notamment l'agrément de conduite, qui est aujourd'hui un critère primordial dans l'appréciation générale d'un véhicule. L'agrément de conduite peut par exemple être jugé sur différents critères, comme l'accélération maximale ou la vitesse maximum que peut atteindre le groupe motopropulseur. Mais s'agissant des HEV, qui sont munis d'une boîte de vitesse automatique, c'est surtout la réponse douce, progressive et précise du groupe motopropulseur à une sollicitation du conducteur, tout au long du passage automatique des rapports, qui fait l'agrément de conduite. En particulier, c'est la faculté de fournir une accélération sans discontinuité ou sans à-coup d'un rapport à un autre, c'est-à-dire avec une variation progressive de l'accélération d'un rapport à un autre. Or, comme explicité précédemment, en fonction du niveau de charge de la batterie de traction, la machine électrique d'un HEV est disponible pour transmettre du couple aux roues, ou elle ne l'est pas, sans qu'on puisse l'anticiper. Ceci se traduit par des discontinuités du couple transmis aux roues, et donc de l'accélération, au détriment de l'agrément de conduite. De même, à état de charge maximal de la batterie de traction, il peut arriver que les performances du moteur thermique soient diminuées pour des raisons là encore imprévisibles a *priori,* comme l'altitude ou la température par exemple. Ceci se traduit là encore par des discontinuités du couple transmis aux roues tout au long du passage automatique des rapports, toujours au détriment de l'agrément de conduite. Il s'agit là encore d'un problème que la présente invention se propose de résoudre.

Dans le but de limiter les discontinuités du couple transmis aux roues, des procédés pour éviter une rupture de couple aux changements de rapport sont connus, c'est-à-dire pour éviter que le couple ne s'annule brièvement comme sur un véhicule à boîte manuelle, comme par exemple le procédé décrit dans EP 2 862 770 A1. Un inconvénient de ce procédé est que, même s'il n'y a pas de rupture du couple transmis aux roues aux changements de rapport, il y a quand même une inflexion de la courbe du couple aux changements de rapport, au détriment de l'agrément de conduite. Il s'agit là encore d'un problème que la présente invention se propose de résoudre. Un procédé pour déterminer la force à transmettre aux roues motrices d'un véhicule comprenant un groupe motopropulseur hybride à plusieurs rapports de boîte de vitesse et d'une batterie de traction est par exemple connu de FR 3 004 231 A1.

L'invention a notamment pour but de surmonter les inconvénients précités, notamment ceux liés aux inflexions de la courbe du couple transmis aux roues aux changements de rapport. Pour cela, l'invention propose de limiter intelligemment la force maximum transmise aux roues. A cet effet, l'invention a pour objet un procédé pour déterminer la force à transmettre aux roues motrices d'un véhicule muni d'un groupe motopropulseur hybride à plusieurs rapports de boîte vitesse et d'une batterie de traction. Le procédé inclut une étape de détermination, sur toute la plage de vitesse que le véhicule est apte à atteindre, de la force maximale que le groupe motopropulseur est théoriquement apte à transmettre aux roues dans des conditions nominales prédéterminées de charge de la batterie de traction et/ou de température extérieure et/ou de pression atmosphérique. Le procédé inclut également une étape de détermination, sur toute la plage de vitesse que le véhicule est apte à atteindre, d'une force d'agrément que le groupe motopropulseur est apte à transmettre aux roues. La force d'agrément vérifie d'une part que, quelle que soit la valeur de la vitesse du véhicule, la force d'agrément est inférieure ou égale à la force maximale. D'autre part, la force d'agrément évolue dans la plage de vitesse sans présenter de point d'inflexion aux valeurs de la vitesse nécessitant un changement de rapport de boîte.

Dans un mode de réalisation préférentiel, en cas de requête d'accélération maximale de la part du conducteur à une vitesse donnée, le procédé peut inclure en outre une étape de calcul d'un coefficient de dégradation pouvant être égal au rapport entre la force maximale que le groupe motopropulseur est réellement apte à transmettre aux roues à la vitesse donnée, compte-tenu des conditions réelles de charge de la batterie de traction et/ou de température extérieure et/ou de pression atmosphérique, et la force maximale que le groupe motopropulseur est théoriquement apte à transmettre aux roues à la vitesse donnée dans les conditions nominales prédéterminées, ainsi qu'une étape de calcul d'une force d'agrément corrigée à transmettre effectivement aux roues pouvant être égale au produit du coefficient de dégradation par la force maximale théorique à la vitesse donnée.

Avantageusement, l'étape de détermination de la force maximale peut inclure de déterminer l'enveloppe supérieure des courbes représentant, pour chacun des rapports de boîte de vitesse, l'évolution de la force transmise aux roues en fonction de la vitesse du véhicule.

Avantageusement, l'étape de détermination de la force d'agrément peut inclure de déterminer une courbe concave par le dessus passant par au moins un point d'inflexion de l'enveloppe supérieure.

La présente invention a également pour objet un calculateur comportant des moyens matériels et logiciels implémentant un tel procédé.

La présente invention a enfin pour objet un véhicule hybride comportant un tel calculateur.

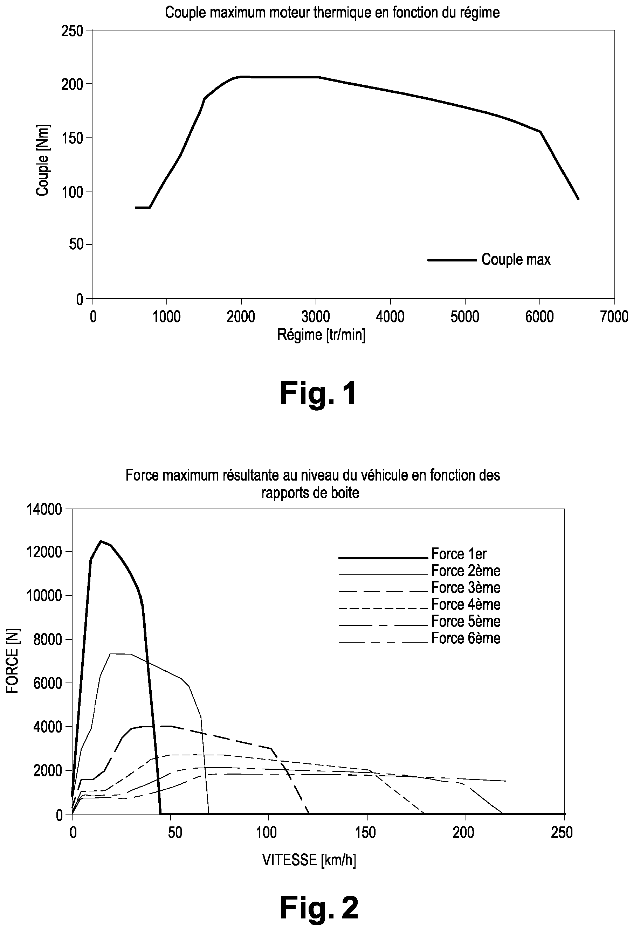

D'autres caractéristiques et avantages de l'invention apparaîtront à l'aide de la description qui suit faite en regard des figures 1 à 7 annexées et qui illustrent, par des graphes et des diagrammes, un exemple de réalisation de l'invention.

La figure 1 illustre, pour un groupe motopropulseur donné, l'évolution du couple moteur maximum que ce dernier peux produire en newton-mètre (Nm), représenté en ordonnée, en fonction du régime moteur en tours par minutes (tr/min), représenté en abscisse. Un tel profil de couple maximum, croissant très rapidement puis décroissant lentement, est caractéristique du couple maximum d'un moteur thermique, ceci quel que soit le rapport de boîte de vitesse sélectionné. Mais la problématique reste la même lorsqu'il s'agit d'un groupe motopropulseur électrique ou lorsqu'il s'agit d'un groupe motopropulseur hybride.

Si, comme illustré par la figure 2 dans le cas d'un HEV, on transpose le profil de la figure 1 dans un référentiel qui illustre l'évolution de la force transmise au véhicule en newtons (N), représentée en ordonnée, en fonction de la vitesse du véhicule en kilomètres par heure (km/h), représentée en abscisse, on constate qu'un groupe motopropulseur hybride, lorsqu'il est associé à sa transmission, n'est pas capable de transmettre une force constante au véhicule. La figure 2 montre que cela est vrai quel que soit le rapport de boîte de vitesse, qui peut varier de 1 à 6 dans l'exemple de cette figure, chacun des 6 rapports correspondant à une courbe sur la figure 2, même si l'amplitude de variation de cette force transmise au véhicule décroît très fortement d'un rapport au rapport supérieur. Il faut noter que cela est également vrai dans le cas d'un groupe motopropulseur thermique ou électrique.

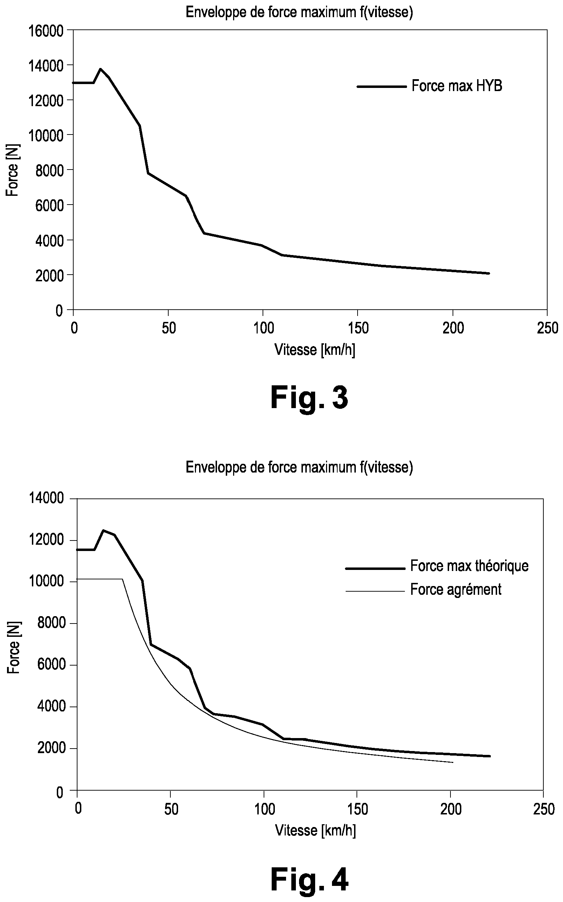

Ainsi, lors d'une manœuvre dite « brio », qui consiste à accélérer en maintenant le pied enfoncé à fond sur la pédale d'accélérateur, le conducteur demande en fait au groupe motopropulseur de fournir son couple maximum du premier rapport de boîte de vitesse jusqu'au dernier, ce qui revient à appliquer au véhicule la courbe de force illustrée par la figure 3, appelée « force max HYB » car elle correspond à un groupe motopropulseur hybride, qui est obtenue simplement en traçant l'enveloppe supérieure des 6 courbes correspondant aux 6 rapports de boîte de vitesse, comme les courbes de la figure 2 pour un autre groupe motopropulseur. Cette courbe est classiquement connue du calculateur central de n'importe quel véhicule, sous la forme d'une cartographie discrétisée par exemple. On constate que cette courbe de force transmise au véhicule comporte de nombreux points d'inflexion assez brutaux, qui se répercutent sous la forme de discontinuités ou d'à-coups dans l'accélération du véhicule. Il faut noter que ces discontinuités ou ces à-coups sont davantage perçus par le conducteur si le véhicule dispose d'une transmission du type DCT ou IVT, couramment utilisées sur des HEV.

Comme illustré par la figure 4, pour supprimer ces discontinuités ou ces à-coups, l'un des principes de l'invention est de définir une courbe de force maximum atteignable dans un but d'agrément, appelée « force agrément » sur la figure, cette courbe étant toujours légèrement en dessous de la courbe de force théorique que peut fournir le véhicule, appelée « force max théorique » sur la figure. Dans l'exemple de la figure, la courbe « force agrément » est la courbe parabolique concave par le dessus, qui est inférieure à la courbe « force max théorique » en tous points, et qui passe par de nombreux points d'inflexion de la courbe « force max théorique », au moins un en tous cas. En imposant au conducteur de pouvoir au mieux suivre cette courbe « force agrément » en cas de manœuvre « brio », on diminue certes les performances du véhicule en termes d'accélération pure, mais on supprime aussi toutes les discontinuités ou à-coups : l'accélération est « lissée » sur toute la plage des rapports de boîte de vitesse. Cette courbe peut être déterminée et mémorisée par le calculateur central du véhicule, sous la forme d'une cartographie discrétisée par exemple.

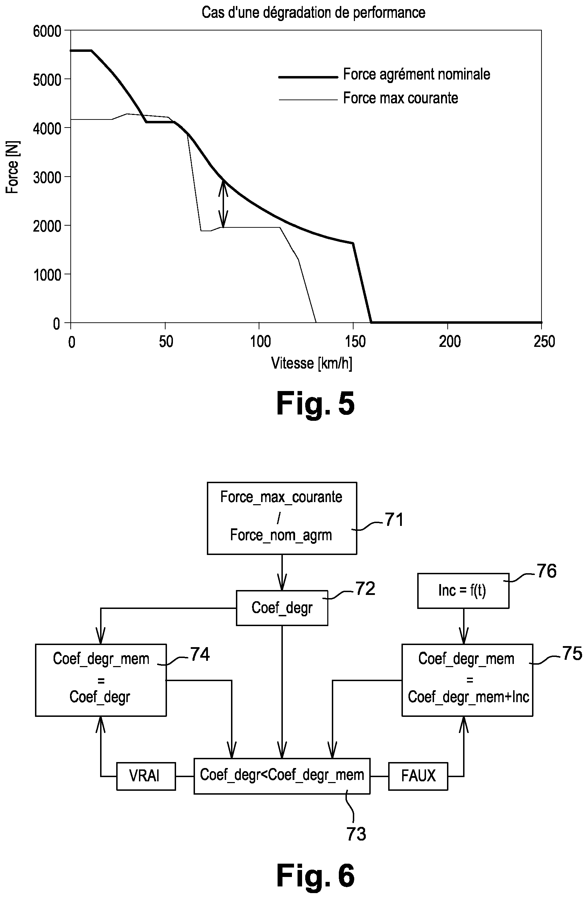

Ce premier principe selon l'invention, à savoir d'utiliser une courbe « force agrément » pour les manœuvres « brio », présente donc l'avantage d'empêcher les discontinuités ou les à-coups dans les cas nominaux de fonctionnement du véhicule, c'est-à-dire quand la batterie est loin de son état de charge minimal et quand les conditions de température et de pression sont normales. Toutefois, dans certains cas, il se peut qu'un groupe motopropulseur hybride ne soit même pas capable d'assurer le couple maximal illustré par la courbe « force agrément ». Par exemple, en cas de batterie déchargée ou froide, la machine électrique peut ne pas être capable de fournir le couple maximal électrique nécessaire pour suivre la courbe « force max théorique ». De même, en cas de forte chaleur et/ou de pression atmosphérique faible, le moteur thermique peut ne pas être capable de fournir le couple maximal thermique nécessaire pour suivre la courbe « force max théorique ». Dans les deux cas, les performances du groupe motopropulseur peuvent fortement diminuer et, si l'on ne fait rien, la limitation réelle du groupe motopropulseur peut devenir plus faible que la limitation d'agrément définie par la courbe « force agrément », comme illustré sur la figure 5 par une courbe « force max courante ». Dans ce cas, l'utilisation dans l'élaboration de la volonté du conducteur d'une limitation d'agrément selon l'invention devient donc insuffisante, car la courbe de limitation réelle comporte de nombreux points d'inflexion sensibles pour le conducteur. En résumé, on est revenu au problème initial, même s'il se produit moins fréquemment dès lors que l'élaboration de la volonté du conducteur utilise une courbe de limitation d'agrément selon l'invention. C'est pourquoi, un autre principe de l'invention est de détecter toute baisse significative de performance, comme celle illustrée par la courbe « force max courante » et par une flèche à double sens sur la figure 5, afin d'adapter la courbe de limitation d'agrément à cette baisse.

A partir de la force maximale courante pouvant être effectivement transmise au véhicule et à partir de la force d'agrément connue grâce à la courbe « force agrément », l'invention propose de déterminer un coefficient représentant la valeur courante de la dégradation de performance par rapport à la force d'agrément. De cette façon, on peut adapter ou corriger en temps réel la courbe de limitation d'agrément, afin de transmettre une force corrigée durant une manœuvre brio.

Ainsi, un coefficient de dégradation Ceof_degr peut être calculé de la façon illustrée par la figure 6. On commence par calculer dans un bloc logiciel 71 le coefficient de dégradation en comparant la force maximum disponible à l'instant t courant, nommée Force_max_courante, qui est classiquement mise à disposition par le calculateur central du véhicule, avec la force nominale d'agrément, nommée Force_nom_agrm, fournie par la courbe de limitation d'agrément selon l'invention et stockée dans la mémoire du calculateur central. Le bloc 71 fournit en sortie le coefficient de dégradation, qui est mémorisé dans une variable Coef_degr par un bloc logiciel 72. Coef_degr est comprise entre 0 et 1, où 0 représente le maximum de dégradation et 1 l'absence de dégradation. Dans un bloc 73, Coef_degr est ensuite comparé à la dernière valeur précédemment calculée du coefficient de dégradation, qui est mémorisée dans une variable Coef_degr_mem. On peut noter que, pour la première itération, Coef_degr_mem est initialisée à 1, qui est la valeur nominale du coefficient de dégradation.

Si le coefficient Coef_degr est strictement inférieur à la dernière valeur précédemment calculée et mémorisée dans Coef_degr_mem (transition VRAI), alors la nouvelle valeur stockée dans Coef_degr est mémorisée dans Coef_degr_mem par un bloc logiciel 74, l'ancienne valeur étant perdue.

Sinon, si le coefficient Coef_degr est supérieur ou égal à la dernière valeur précédemment calculée et mémorisée dans Coef_degr_mem (transition FAUX), alors Coef_degr_mem est incrémentée par un bloc logiciel 75 d'un offset « Inc » dépendant de l'instant t courant fournit par un bloc logiciel 76, afin de remonter petit à petit vers la valeur nominale du coefficient de dégradation, à savoir 1.

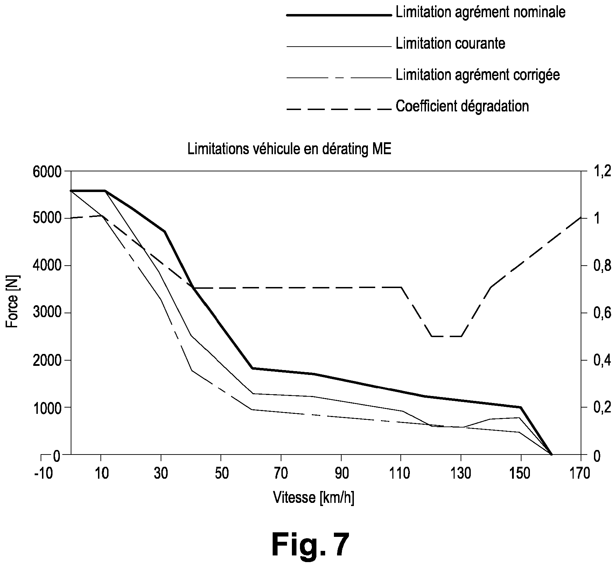

Dans le cas d'une dégradation de performance, l'invention va agir de la façon illustrée par la figure 7, qui illustre d'une part une courbe de limitation d'agrément nominale selon l'invention, une courbe de limitation courante « réelle » avec de nombreuses discontinuités de force, l'évolution du coefficient de dégradation qui résulte de la comparaison des deux courbes précédentes selon la méthode illustrée par la figure 6, et enfin la courbe d'agrément corrigée qui résulte de l'application du coefficient de dégradation à la courbe de limitation d'agrément nominale, selon la méthode illustrée par la figure 6. On constate bien que la limitation d'agrément corrigée est modulée pour se trouver toujours en dessous de ce que peut effectivement produire le véhicule, c'est-à-dire en dessous de la courbe de limitation courante « réelle ». Selon l'invention, lors d'une manœuvre « brio », le conducteur ne peut avoir accès qu'à la limitation d'agrément corrigée et ainsi il n'est plus impacté par la limitation courante réelle, qui comporte des discontinuités de force. Ces discontinuités de force ne sont donc pas ressenties par le conducteur.

Dans un mode de réalisation non revendiqué, le conducteur pourrait choisir d'abord un mode énergétique du véhicule parmi :
- « Hybride auto » : la loi de gestion d'énergie serait libre de choisir le fonctionnement, sans contrainte de la part du conducteur ;
- « ZEV forcé » : le conducteur pourrait privilégier l'utilisation du roulage en mode électrique pur, via la décharge batterie, parce-qu'il roule en ville par exemple ;
- « Range Saver » : le conducteur pourrait privilégier le maintien de charge batterie, via l'utilisation accrue du moteur thermique, par exemple parce-qu'il sait qu'il terminera son parcours en ville et qu'il passera alors en mode « ZEV forcé ».

Une courbe de limitation d'agrément et donc une force d'agrément pourrait alors être déduite en fonction du mode énergétique choisi.

Un autre avantage de la présente invention est que la limitation de couple est transparente pour le conducteur : il y a très peu de chance qu'il s'en s'aperçoive d'une manœuvre « brio » à une autre. Enfin, l'invention permet de toujours maintenir le niveau de charge de la batterie à un niveau acceptable, de sorte que le système n'est jamais déstabilisé (en particulier en maintenant l'état de charge de la batterie de traction dans une plage opérationnelle), ceci même si le conducteur enchaîne les manoeuvres « brio ».

## Revendications

1. Procédé pour déterminer la force à transmettre aux roues motrices d'un véhicule muni d'un groupe motopropulseur hybride à plusieurs rapports de boîte vitesse et d'une batterie de traction, le procédé étant **caractérisé en ce qu'**il inclut :
- une étape de détermination, sur toute la plage de vitesse que le véhicule est apte à atteindre, de la force maximale que le groupe motopropulseur est théoriquement apte à transmettre aux roues dans des conditions nominales prédéterminées de charge de la batterie de traction et/ou de température extérieure et/ou de pression atmosphérique ;
- une étape de détermination, sur toute la plage de vitesse que le véhicule est apte à atteindre, d'une force d'agrément que le groupe motopropulseur est apte à transmettre aux roues, ladite force d'agrément vérifiant que :
o quelle que soit la valeur de la vitesse du véhicule, la force d'agrément est inférieure ou égale à la force maximale ;
o la force d'agrément évolue dans la plage de vitesse sans présenter de point d'inflexion aux valeurs de la vitesse nécessitant un changement de rapport de boîte.

2. Procédé selon la revendication 1, **caractérisé en ce que**, en cas de requête d'accélération maximale de la part du conducteur à une vitesse donnée, il inclut :
- une étape de calcul d'un coefficient de dégradation, ledit coefficient étant égal au rapport entre :
o la force maximale que le groupe motopropulseur est réellement apte à transmettre aux roues à la vitesse donnée, compte-tenu des conditions réelles de charge de la batterie de traction et/ou de température extérieure et/ou de pression atmosphérique, et ;
o la force maximale que le groupe motopropulseur est théoriquement apte à transmettre aux roues à la vitesse donnée dans les conditions nominales prédéterminées ;
- une étape de calcul d'une force d'agrément corrigée à transmettre effectivement aux roues, ladite force corrigée étant égale au produit du coefficient de dégradation par la force maximale théorique à la vitesse donnée.

3. Procédé selon la revendication 1, **caractérisé en ce que** l'étape de détermination de la force maximale inclut de déterminer l'enveloppe supérieure des courbes représentant, pour chacun des rapports de boîte de vitesse, l'évolution de la force transmise aux roues en fonction de la vitesse du véhicule.

4. Procédé selon la revendication 3, **caractérisé en ce que** l'étape de détermination de la force d'agrément inclut de déterminer une courbe concave par le dessus passant par au moins un point d'inflexion de l'enveloppe supérieure.

5. Calculateur **caractérisé en ce qu'**il comporte des moyens matériels et logiciels implémentant le procédé selon l'une quelconque des revendications précédentes.

6. Véhicule hybride **caractérisé en ce qu'**il comporte un calculateur selon la revendication précédente.

## Patentansprüche

1. Verfahren zur Bestimmung der Kraft, die an die Antriebsräder eines Fahrzeugs zu übertragen ist, das mit einem Hybridantriebsstrang mit mehreren Getriebegängen und einer Antriebsbatterie ausgestattet ist, wobei das Verfahren **dadurch gekennzeichnet ist, dass** es Folgendes enthält:
- einen Schritt des Bestimmens, über den gesamten Geschwindigkeitsbereich, den das Fahrzeug erreichen kann, der maximalen Kraft, die der Antriebsstrang unter vorbestimmten nominalen Ladebedingungen der Antriebsbatterie und/oder Außentemperatur- und/oder Atmosphärendruckbedingungen theoretisch an die Räder übertragen kann;
- einen Schritt des Bestimmens, über den gesamten Geschwindigkeitsbereich, den das Fahrzeug erreichen kann, einer Komfortkraft, die der Antriebsstrang an die Räder übertragen kann, wobei die Komfortkraft überprüft, dass:
o ganz gleich, welcher der Wert der Geschwindigkeit des Fahrzeugs ist, die Komfortkraft kleiner als oder gleich der maximalen Kraft ist;
o sich die Komfortkraft in dem Geschwindigkeitsbereich bewegt, ohne einen Knickpunkt an den Geschwindigkeitswerten aufzuweisen, die einen Gangwechsel erfordern.

2. Verfahren nach Anspruch 1, **dadurch gekennzeichnet, dass** es bei maximalem Beschleunigungsabruf seitens des Fahrers bei einer bestimmten Geschwindigkeit Folgendes enthält:
- einen Schritt des Berechnens eines Verschlechterungskoeffizienten, wobei der Koeffizient gleich dem Verhältnis zwischen Folgendem ist:
o der maximalen Kraft, die der Antriebsstrang tatsächlich bei der bestimmten Geschwindigkeit an die Räder übertragen kann, unter Berücksichtigung der tatsächlichen Ladebedingungen der Antriebsbatterie und/oder Außentemperatur- und/oder Atmosphärendruckbedingungen, und;
o der maximalen Kraft, die der Antriebsstrang bei der bestimmten Geschwindigkeit unter vorbestimmten nominalen Bedingungen theoretisch an die Räder übertragen kann;
- einen Schritt des Berechnens einer korrigierten Komfortkraft, die tatsächlich an die Räder zu übertragen ist, wobei die korrigierte Kraft gleich dem Produkt von dem Verschlechterungskoeffizienten mal die theoretische maximale Kraft bei der bestimmten Geschwindigkeit ist.

3. Verfahren nach Anspruch 1, **dadurch gekennzeichnet, dass** der Schritt des Bestimmens der maximalen Kraft das Bestimmen der oberen Hüllkurve der Kurven enthält, die für jeden der Getriebegänge die Entwicklung der Kraft darstellt, die in Abhängigkeit von der Geschwindigkeit des Fahrzeugs an die Räder übertragen wird.

4. Verfahren nach Anspruch 3, **dadurch gekennzeichnet, dass** der Schritt des Bestimmens der Komfortkraft das Bestimmen einer von oben konkaven Kurve enthält, die wenigstens einen Knickpunkt der oberen Hüllkurve durchläuft.

5. Rechner, **dadurch gekennzeichnet, dass** er Hardware-und Softwaremittel aufweist, die das Verfahren nach einem der vorhergehenden Ansprüche implementieren.

6. Hybridfahrzeug, **dadurch gekennzeichnet, dass** es einen Rechner nach dem vorhergehenden Anspruch aufweist.

## Claims

1. Method for determining the force to be transmitted to the driving wheels of a vehicle provided with a hybrid power train with several gear ratios and a traction battery, the method being **characterized in that** it includes:
- a step of determination, over all the speed range that the vehicle is capable of achieving, of the maximum force that the power train is theoretically capable of transmitting to the wheels in predetermined nominal conditions of charge of the traction battery and/or of outside temperature and/or of atmospheric pressure;
- a step of determination, over all the speed range that the vehicle is capable of achieving, of a drivability force that the power train is capable of transmitting to the wheels, said drivability force confirming that:
o whatever the value of the speed of the vehicle, the drivability force is less than or equal to the maximum force;
o the drivability force evolves within the speed range without exhibiting an inflexion point at the values of the speed requiring a gear change.

2. Method according to Claim 1, **characterized in that**, in case of a request for maximum acceleration from the driver at a given speed, it includes:
- a step of computation of a degradation coefficient, said coefficient being equal to the ratio between:
o the maximum force that the power train is really capable of transmitting to the wheels at the given speed, given the real conditions of charge of the traction battery and/or of outside temperature and/or of atmospheric pressure, and;
o the maximum force that the power train is theoretically capable of transmitting to the wheels at the given speed in the predetermined nominal conditions;
- a step of computation of a corrected drivability force to be actually transmitted to the wheels, said corrected force being equal to the product of the degradation coefficient by the theoretical maximum force at the given speed.

3. Method according to Claim 1, **characterized in that** the step of determination of the maximum force includes determining the upper envelope of the curves representing, for each of the gear ratios, the trend of the force transmitted to the wheels as a function of the speed of the vehicle.

4. Method according to Claim 3, **characterized in that** the step of determination of the drivability force includes determining an upwardly concave curve passing through at least one inflexion point of the upper envelope.

5. Computer, **characterized in that** it comprises hardware and software means implementing the method according to any one of the preceding claims.

6. Hybrid vehicle, **characterized in that** it comprises a computer according to the preceding claim.
